(19) Europäisches Patentamt / European Patent Office / Office européen des brevets

(11) **EP 3 470 884 B1**

(12) **FASCICULE DE BREVET EUROPEEN**

(45) Date de publication et mention
de la délivrance du brevet:
**23.03.2022 Bulletin 2022/12**

(51) Classification Internationale des Brevets (IPC):
*G01V 1/18* *(2006.01)*       *G01V 13/00* *(2006.01)*

(21) Numéro de dépôt: **18199968.1**

(52) Classification Coopérative des Brevets (CPC):
**G01V 1/181; G01V 13/00**

(22) Date de dépôt: **11.10.2018**

(54) **PROCÉDÉ DE FILTRAGE D'UN SIGNAL DE RÉPONSE D'UN GÉOPHONE ET CAPTEUR ASSOCIÉ**

FILTERVERFAHREN EINES ANTWORTSIGNALS EINES GEOPHONS, UND ENTSPRECHENDER SENSOR

METHOD FOR FILTERING A RESPONSE SIGNAL FROM A GEOPHONE AND ASSOCIATED SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2017 FR 1759513**

(43) Date de publication de la demande:
**17.04.2019 Bulletin 2019/16**

(73) Titulaire: **Staneo**
**31100 Toulouse (FR)**

(72) Inventeur: **JUDENHERC, Sébastien**
**31400 TOULOUSE (FR)**

(74) Mandataire: **Plasseraud IP**
**66, rue de la Chaussée d'Antin**
**75440 Paris Cedex 09 (FR)**

(56) Documents cités:
**US-A- 4 296 483**

• **Ion Sensor Nederland Bv: "LF-24 Low Frequency Velocity Sensor", , 6 août 2014 (2014-08-06), XP055484031, Extrait de l'Internet: URL:https://www.iongeo.com/content/documents/Resource%20Center/Brochures%20and%20Data%20Sheets/Data%20Sheets/Sensor%20Geophones/DS_SEN_121032LF24.pdf [extrait le 2018-06-13]**
• **PETER MAXWELL ET AL: "What receivers will we use for low frequencies?", SEG TECHNICAL PROGRAM EXPANDED ABSTRACTS 2011, 18 septembre 2011 (2011-09-18), pages 72-76, XP055484004, DOI: 10.1190/1.3628181**
• **Michael S Hons ET AL: "Transfer functions of geophones and accelerometers and their effects on frequency content and wavelets", Crewes Research Report - Volume 18, 25 novembre 2006 (2006-11-25), XP055484280, Extrait de l'Internet: URL:https://crewes.org/ForOurSponsors/ResearchReports/2006/2006-03.pdf [extrait le 2018-06-14]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne les capteurs vélocimétriques à courte période, typiquement de l'ordre de 0,5 à 10 s, adaptés notamment pour la surveillance microsismique, par exemple de réservoirs ou de puits profonds, la mesure de bruit sismique, la surveillance de la santé d'un bâtiment et la surveillance des tremblements de terre.

Il existe à ce jour différents types de capteurs vélocimétriques adaptés pour la mesure des vibrations de courte période. On compte parmi eux les capteurs à balance de force à contre réaction, qui offrent une large bande passante mais sont très couteux (de l'ordre de 12 000 à 15 000 EUR), volumineux, sensibles et fragiles. Il existe aussi des géophones de moindre coût (quelques dizaines d'euros), plus compacts et plus robustes. Cependant, leur fréquence propre est de l'ordre de 4,5 Hz et donc insuffisante pour la mesure des périodes envisagées.

On connait de l'art antérieur différentes méthodes permettant d'élargir la réponse spectrale de tels géophones de manière à pouvoir mesurer des vibrations de fréquence inférieure à la fréquence propre intrinsèque du géophone.

Une méthode est décrite dans le document DE 3307575 A1. Ce document divulgue un géophone et un amplificateur jouant le rôle d'une résistance négative là où on place en général une résistance positive pour amortir le géophone. Un courant est donc injecté dans le géophone afin d'élargir la réponse spectrale du géophone. La valeur du gain de l'amplificateur est définie par les résistances branchées aux bornes de l'amplificateur opérationnel et leurs valeurs sont déterminées en fonction de l'amortissement m et de la fréquence propre fo intrinsèques du géophone. La qualité de la réponse spectrale du capteur ainsi obtenu pour une fréquence propre comprise entre une fréquence propre de consigne et la fréquence propre intrinsèque dépend donc de la méthode de détermination de l'amortissement m et de la fréquence propre fo intrinsèques du géophone et de la valeur des résistances choisies. De plus, le capteur ainsi obtenu ne peut être utilisé que dans des conditions d'utilisation nominales, la réponse du capteur n'étant pas garantie notamment pour des températures et/ou des inclinaisons différentes des conditions nominales d'utilisation du capteur.

Le document US 4 296 483 B2 décrit une méthode de détermination de l'amortissement m et de la fréquence propre fo intrinsèques du géophone. La réponse du géophone à un courant d'excitation d'une durée déterminée est mesurée par un capteur de force. L'amortissement m et la fréquence intrinsèque fo du géophone sont déterminés à partir des amplitudes des oscillations du capteur de force. L'utilisation d'une telle méthode présente des inconvénients.

D'une part, la détermination de l'amortissement intrinsèque m et de la fréquence intrinsèque fo du géophone peut être faussée si le courant d'excitation n'est pas suffisamment stable et si le capteur de force n'est pas bien calibré ou pas assez sensible. Le courant d'excitation peut en effet présenter des distortions si le générateur de courant correspondant est placé à distance du géophone.

D'autre part, cette méthode ne peut être utilisée pour déterminer l'amortissement m et la fréquence propre fo de géophones déjà installés dans des endroits peu accessibles tels des puits de forage à plusieurs centaines de mètres en dessous de la surface du sol sans avoir à remplacer le géophone en place par un géophone équipé d'un capteur de force.

Une autre méthode permettant d'élargir la réponse du géophone et donc la plage de fréquences exploitable concerne l'utilisation de filtres inverses comme décrit dans l'article « what receivers will we use for low frequencies ? », Peter Maxwell and Malcolm Lansley par exemple. Un filtre inverse analogique est mis en œuvre dans le géophone LF-24 de la société Ion SENSOR entre la fréquence propre intrinsèque du géophone et une fréquence propre de consigne. Ce filtre est calibré en usine en fonction des valeurs d'amortissement et de fréquence intrinsèques mesurées lors de la calibration. Le filtre n'est donc pas adapté aux conditions d'utilisation réelles du géophone lorsque celles-ci diffèrent des conditions d'utilisation nominales, notamment lorsque le géophone est incliné.

Objet et résumé de l'invention

La présente invention vise notamment à pallier les inconvénients de l'art antérieur précités.

En particulier, un but de l'invention est d'améliorer la performance des capteurs vélocimétriques à courte période comprenant des géophones dont la réponse spectrale est élargie, notamment lorsque ces capteurs vélocimétriques sont utilisés dans des conditions différentes des conditions nominales d'utilisation.

Un autre but de l'invention est d'améliorer la performance des géophones déjà installés dans les sites peu accessibles.

Un autre but de l'invention est de proposer une méthode de détermination de la fréquence propre et de l'amortissement intrinsèque plus fiable.

À cet effet, la présente invention propose, selon un premier aspect, un procédé de filtrage d'un signal de réponse d'un géophone, ledit géophone comportant un aimant entouré d'une bobine montée mobile par rapport à l'aimant, la bobine étant apte à se déplacer suite à des vibrations d'un environnement de ladite bobine, le géophone présentant un amortissement intrinsèque et une fréquence propre intrinsèque.

Le procédé comporte:

- la détermination de l'amortissement intrinsèque et de la fréquence propre intrinsèque du géophone, comprenant :

  o l'alimentation de la bobine avec un courant d'excitation pendant une durée prédéterminée,
  o la détermination, à l'aide du signal de réponse du géophone mesuré à la disparition du courant d'excitation, ledit signal étant représentatif du courant induit dans la bobine par le déplacement de la bobine par rapport à l'aimant, de la fréquence propre intrinsèque et de l'amortissement intrinsèque du géophone,

- la détermination d'un filtre numérique configuré pour modifier une fréquence propre du géophone d'une fréquence propre intrinsèque à une fréquence propre de consigne, la fréquence propre de consigne étant inférieure à la fréquence propre intrinsèque et ajuster le gain du géophone de telle sorte que ledit gain soit sensiblement constant pour des fréquences comprises entre la fréquence propre de consigne et la fréquence propre intrinsèque,
- l'application dudit filtre sur ledit signal de réponse du géophone.

Le procédé de filtrage proposé comprend une nouvelle méthode de détermination de l'amortissement et de la fréquence propre intrinsèques associée à l'utilisation d'un filtre numérique. Cette nouvelle méthode se base sur la mesure du signal de réponse du géophone après la disparition du courant d'excitation stationnaire alimentant la bobine. Le courant d'excitation est utilisé pour déplacer la bobine par rapport à l'aimant. Contrairement aux dispositifs de l'art antérieur, la réponse du géophone est donc mesurée lorsque la bobine n'est plus soumise au courant d'excitation. La réponse du géophone mesurée correspond donc bien à la réponse du géophone à une excitation mécanique, c'est-à-dire à un déplacement de la bobine et à la réponse du géophone suite à ce déplacement. L'amortissement et la fréquence propre intrinsèques sont donc mesurés avec plus de précision.

De plus, l'utilisation d'un filtre numérique permet d'adapter la fonction de filtrage aux paramètres mesurés, à savoir l'amortissement et la fréquence propre intrinsèques avec plus de précision et de flexibilité par rapport à la fonction de transfert du filtre souhaitée. Par ailleurs, les variations de température ont moins d'influence sur un filtre numérique que sur un filtre analogique puisqu'il ne contient pas de composants dont la réponse varie en fonction de la température. De plus, le signal de réponse du géophone est représentatif du courant induit dans la bobine par le déplacement de la bobine par rapport à l'aimant. Ainsi, lorsque le signal de réponse du géophone est mesuré directement à ses bornes, des géophones déjà implantés peuvent être recalibrés dans leurs conditions d'utilisation sans qu'il soit nécessaire de changer le géophone déjà en place.

Dans des modes de réalisation, le procédé de filtre comprend l'une ou plusieurs des caractéristiques suivantes :

- la fréquence propre de consigne est comprise entre 0,1 et 1 Hz,
- le procédé comprend le positionnement du géophone in situ avant la mise en œuvre de la détermination de l'amortissement intrinsèque et de la fréquence propre intrinsèque. Le procédé de filtrage est donc adapté aux conditions d'utilisation réelles du géophone. Cela est particulièrement avantageux lorsque le géophone est soumis à des températures et des inclinaisons différentes des conditions d'utilisation nominales du géophone, par exemple lorsque le géophone est placé dans un puits profond,

- le signal de réponse du géophone mesuré à la disparition du courant d'excitation comporte au moins deux extrema locaux consécutifs et une valeur prédéterminée correspondant au signal de réponse mesuré en l'absence de courant d'excitation et de vibrations, la valeur prédéterminée étant comprise entre les deux extrema locaux, et la fréquence propre intrinsèque et l'amortissement intrinsèque sont déterminés à partir des formules suivantes :

$$m = \frac{1}{\sqrt{1 + tan\left(\pi\frac{\Delta t1}{\Delta t2}\right)}},$$

et

$$\omega_0 = \frac{\pi}{\Delta t2\sqrt{1 - m^2}},$$

dans lesquelles:

$\Delta t1$ est un premier intervalle de temps mesuré entre la disparition du courant d'excitation et le premier extremum local,
$\Delta t2$ est un second intervalle de temps mesuré entre la disparition du courant d'excitation et la première valeur

nulle prédéterminée, et
$\omega_0$ est la pulsation propre définie par $\omega_0=2\pi f_0$, fo étant la fréquence propre intrinsèque,

- l'amortissement intrinsèque est inférieur à 1, de préférence inférieur à 0,65,
- le gain du géophone est également ajusté de telle sorte que ledit gain soit également sensiblement constant pour des fréquences supérieures à la fréquence propre intrinsèque. On obtient ainsi un gain constant pour des fréquences supérieures à la fréquence propre de consigne, ce qui permet de mesurer des vibrations sur une plus grande gamme de fréquences,
- le filtre numérique présente une fonction de transfert correspondant à l'inverse de la fonction de transfert du géophone pour une fréquence supérieure à la fréquence propre de consigne,
- le filtre présente la fonction de transfert suivante :

$$\mathrm{TF}_{\mathrm{filter}}(p) = \frac{p^2+2m\omega_0+\omega_0{}^2}{p^2+2m_1\omega_1+\omega_1{}^2},$$

dans laquelle $\omega_0$ est la pulsation propre intrinsèque définie par $\omega_0=2\pi f_0$, fo étant la fréquence propre intrinsèque et $\omega_1$ est la pulsation propre de consigne définie par $\omega_1=2\pi f_1$, fi étant la fréquence propre de consigne et $m_1$ l'amortissement de consigne.

- le filtre numérique est un filtre à réponse impulsionnelle infinie de la forme :

$$y_n = k_{\mathrm{xn}}x_n + k_{\mathrm{xn}-1}x_{n-1} + k_{\mathrm{xn}-2}x_{n-2} - k_{\mathrm{yn}-1}y_{n-1} - k_{\mathrm{yn}-2}y_{n-2},$$

avec $x_n$, $x_{n-1}$ et $x_{n-2}$ correspondant au signal de réponse du géophone à l'instant t et aux instants t-T et t-2T, respectivement, et
$y_n$, $y_{n-1}$ et $y_{n-2}$ correspondant au signal de réponse du géophone modifié par le filtre à l'instant t et aux instants t-T et t-2T respectivement,
T étant la période d'échantillonnage et
$k_{\mathrm{xn}}$, $k_{\mathrm{xn}-1}$, $k_{\mathrm{xn}-2}$, $k_{\mathrm{yn}-1}$, $k_{\mathrm{yn}-2}$ étant les coefficients du filtre numérique définis par

$$k_{\mathrm{xn}} = \frac{1}{K}\left(\frac{4}{T^2} + 2\frac{k_1}{T} + k_2\right),$$

$$k_{\mathrm{xn}-1} = \frac{1}{K}\left(2k_2 - \frac{8}{T^2}\right),$$

$$k_{\mathrm{xn}-2} = \frac{1}{K}\left(\frac{4}{T^2} - 2\frac{k_1}{T} + k_2\right),$$

$$k_{\mathrm{yn}-1} = \frac{1}{K}\left(2K_2 - \frac{8}{T^2}\right),$$

$$k_{\mathrm{yn}-2} = \frac{1}{K}\left(\frac{4}{T^2} + 2\frac{K_1}{T} + K_2\right),$$

avec

$K_1 = 2m_1\omega_1,$
$K_2 = \omega_1{}^2,$
$k_1 = 2m\omega_0,$
$k_2 = \omega_0{}^2,$

et $K = \left(\frac{4}{T^2} + \frac{2K_1}{T} + K_2\right)$,

les coefficients $k_{xn}$, $k_{xn-1}$ et $k_{xn-2}$ étant en outre déterminés à l'aide des valeurs d'amortissement intrinsèque et de fréquence propre intrinsèque déterminées lors de la mise en œuvre de la détermination de l'amortissement intrinsèque et de la fréquence propre intrinsèque, l'utilisation d'un filtre à réponse impulsionnelle infinie permettant d'utiliser des composants avec des ressources de calcul et de mémoire limités, résultant en un capteur moins coûteux et plus autonome en énergie,

- l'amortissement de consigne $m_1$ est égal à $\sqrt{2}/2$.

La présente invention propose, selon un second aspect, un capteur vélocimétrique configuré pour la mesure de vibrations comportant :

- un géophone comportant un aimant entouré d'une bobine montée mobile par rapport à l'aimant, la bobine étant apte à se déplacer suite à des vibrations d'un environnement de ladite bobine,
- un module de filtrage du signal de réponse du géophone;
- un générateur de courant adapté pour recevoir un signal de commande du module et pour générer en réponse audit signal de commande un courant d'excitation de durée déterminée dans la bobine du géophone;

ledit module comprenant :

- un calculateur configuré pour :

    o déterminer l'amortissement intrinsèque et la fréquence propre intrinsèque du géophone en alimentant la bobine avec le courant d'excitation pendant la durée prédéterminée et en déterminant, à l'aide du signal de réponse du géophone mesuré à la disparition du courant d'excitation, la fréquence propre intrinsèque et l'amortissement intrinsèque du géophone,
    o déterminer un filtre numérique configuré pour modifier une fréquence propre du géophone d'une fréquence propre intrinsèque à une fréquence propre de consigne, la fréquence propre de consigne étant inférieure à la fréquence propre intrinsèque et ajuster le gain du géophone de telle sorte que ledit gain soit sensiblement constant pour des fréquences comprises entre la fréquence propre de consigne et la fréquence propre intrinsèque,
    o appliquer ledit filtre sur le signal de réponse fourni par le géophone.

Dans un mode de réalisation, le géophone, le module et le générateur sont intégrés dans un même boitier. Dans un autre mode de réalisation, le module de filtrage et le générateur de courant sont distants du géophone et reliés à celui-ci par des câbles. Ainsi, le procédé selon l'invention peut être mis en œuvre sur un géophone existant déjà en place.

Enfin, la présente invention propose, selon un dernier aspect, un produit programme d'ordinateur comprenant des instructions permettant la mise en œuvre du procédé tel que décrit précédemment lorsque ledit programme est exécuté sur un ordinateur.

Brève description des dessins

Des détails et avantages de la présente invention apparaitront mieux de la description qui suit, faite en référence aux dessins annexés sur lesquels :

La figure 1 représente un module de filtrage du signal de réponse d'un géophone ainsi qu'un capteur vélocimétrique équipé d'un tel module,
La figure 2 représente le procédé de filtrage d'un signal de réponse d'un géophone selon un mode de réalisation de l'invention,
La figure 3 représente le signal de réponse du géophone suite à l'application d'un courant d'excitation dans la bobine du géophone pendant une durée déterminée,
La figure 4 représente un exemple de fonction de transfert du géophone, de fonction de transfert du filtre numérique et de fonction de transfert du géophone après application du filtre numérique.

## Description détaillée d'un mode de réalisation de l'invention

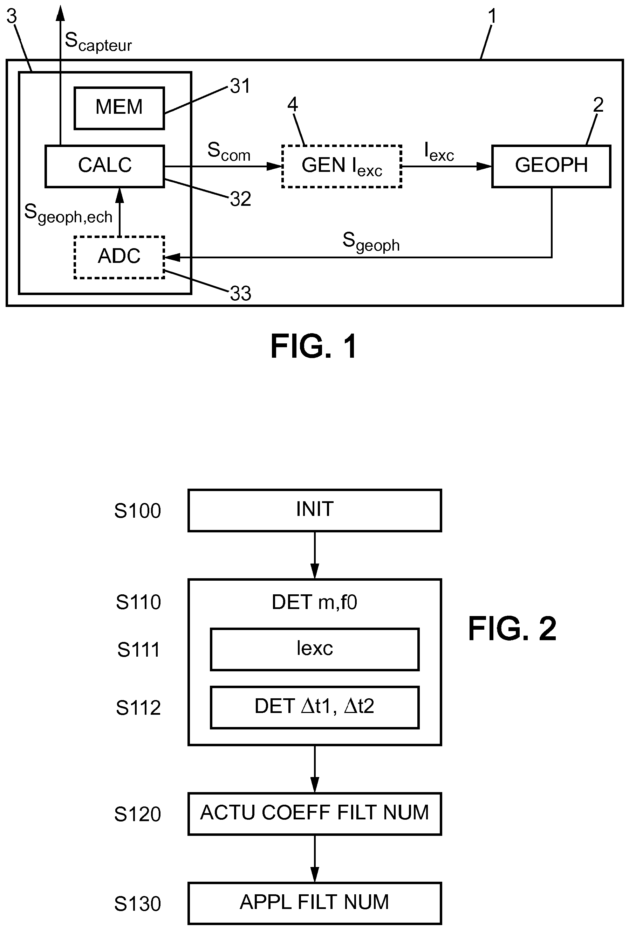

La figure 1 représente de manière schématique un capteur vélocimétrique 1 comprenant un module de filtrage 3 selon un mode de réalisation de l'invention.

Le capteur 1 comprend un géophone 2, un module de filtrage 3 et un générateur de courant 4. Le générateur de courant 4 peut être une carte externe reliant le module 3 au géophone 2 comme représenté dans la figure 1 ou être intégré dans le module 3.

Le géophone 2 comprend un aimant entouré d'une bobine montée mobile par rapport à l'aimant. Il peut s'agir, par exemple, d'un géophone SM-6 de la marque ION ayant une fréquence propre intrinsèque de 4,5 Hz (+/-10%). En présence de vibrations, la bobine bouge par rapport à l'aimant, ce qui produit un courant induit. Le géophone 2 peut comprendre également une résistance branchée en court-circuit aux bornes de la bobine. Cette résistance permet de définir la valeur de l'amortissement intrinsèque m. Le signal de réponse du géophone $S_{geoph}$ est représentatif du courant induit dans la bobine par le déplacement de la bobine par rapport à l'aimant. Il peut s'agir, par exemple, d'une tension. Le module de filtrage 3 comprend un calculateur 32 et une mémoire 31. Le calculateur 32, ici un microprocesseur, est configuré pour déterminer l'amortissement intrinsèque m et la fréquence propre intrinsèque fo du géophone et pour déterminer et appliquer un filtre numérique. De manière avantageuse, le filtre numérique est configuré pour modifier une fréquence propre du géophone d'une fréquence propre intrinsèque au géophone utilisé, à une fréquence propre de consigne inférieure à la fréquence propre intrinsèque et ajuster le gain du géophone de telle sorte que ledit gain soit sensiblement constant au moins pour des fréquences comprises entre la fréquence propre de consigne et la fréquence propre intrinsèque. On s'assure ainsi que le gain est constant pour les signaux de courte période qu'on souhaite mesurer. Ces signaux ont par exemple une fréquence comprise entre 0,1 et 2 Hz. La fréquence propre de consigne est donc choisie en fonction de l'application visée. L'expression et les coefficients du filtre numérique sont stockés dans la mémoire 31 ainsi que les instructions de programme d'ordinateur permettant notamment de déterminer l'amortissement intrinsèque m et la fréquence propre intrinsèque fo du géophone, d'actualiser les coefficients du filtre numérique en fonction des valeurs d'amortissement intrinsèque m et la fréquence propre intrinsèque fo déterminés et d'appliquer le filtre numérique sur le signal de réponse du géophone $S_{geoph}$, et plus particulièrement sur le signal de réponse échantillonné du géophone $S_{geoph,ech}$.

Le générateur de courant 4 est adapté pour recevoir un signal de commande $S_{com}$ du module et pour générer en réponse audit signal de commande un courant d'excitation $I_{exc}$ de durée déterminée dans la bobine du géophone 2. Le signal de réponse $S_{geoph}$ du géophone 2 mesuré à la disparition du courant d'excitation est utilisé pour déterminer l'amortissement intrinsèque m et la fréquence propre intrinsèque fo du géophone 2. Le signal de réponse du géophone 2 est mesuré directement aux bornes du géophone. On utilise de préférence un signal différentiel afin de s'affranchir des perturbations électromagnétiques par exemple. Dans ce mode de réalisation, le module 3 comprend un convertisseur analogique numérique 33 configuré pour transformer le signal de réponse du géophone $S_{geoph}$ en un signal de réponse du géophone échantillonné $S_{géoph,ech}$. Le signal de réponse échantillonné $S_{géoph,ech}$ est transmis au microprocesseur 32 qui l'utilise dans certaines conditions, soit pour déterminer l'amortissement intrinsèque m et la fréquence propre intrinsèque fo, soit pour y appliquer le filtre numérique. Une fois le filtre numérique appliqué, le module 3 et donc le capteur 1 restitue le signal $S_{capteur}$. Un module 3 adapté pour la mise en œuvre de l'invention et comprenant un convertisseur analogique est par exemple un module D9-DIN commercialisé par la société STANEO.

Dans un mode de réalisation, le module de filtrage 3 et/ou le générateur de courant 4 sont intégrés avec le géophone dans un seul boitier. Dans un autre mode de réalisation, le module de filtrage 3 et le générateur de courant 4 sont reliés au géophone par des câbles électriques de préférence en cuivre. Il est ainsi possible, dans une telle configuration, d'équiper des géophones installés dans des endroits peu accessibles d'un module de filtrage selon l'invention.

La figure 2 représente le procédé de filtrage du signal de réponse d'un géophone mis en œuvre dans le capteur décrit précédemment selon un mode de réalisation de l'invention.

Le procédé comprend une étape S100 d'initialisation dans laquelle l'expression et les coefficients du filtre numérique sont chargés dans le module de filtrage 3.

On décrit ici la façon dont est obtenue l'expression du filtre et des coefficients du filtre numérique. De manière connue de l'homme du métier, un géophone comportant une bobine mobile autour d'un aimant fixe se comporte comme un filtre passe-haut d'ordre 2 de fréquence fo et d'amortissement m.

La fonction de transfert intrinsèque du géophone en réponse à la vitesse de vibration d'un géophone est donc de la forme :

$$\text{TF}_{gi}(p) = \frac{p^2}{p^2 + 2m\omega_0 + \omega_0{}^2} \quad \text{avec } \omega_0 = 2\pi f_0 \text{ et } p = 2\pi f, \text{ f étant une fréquence.}$$

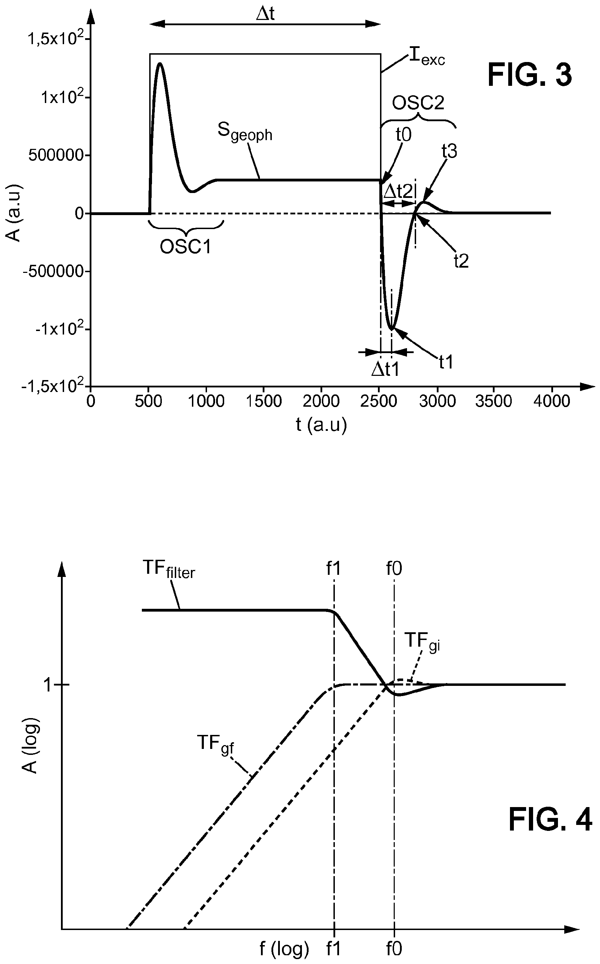

La fonction de transfert du géophone $\text{TF}_{gi}$ pour un géophone avec un amortissement d'environ 0,55 est représentée en référence à la figure 4. La fonction de transfert intrinsèque du géophone $\text{TF}_{gi}$ présente un gain normalisé sensiblement constant égal à 1 pour des fréquences supérieures à la fréquence propre intrinsèque fo et une pente constante pour des fréquences inférieures à la fréquence propre intrinsèque, de valeur 1 comme illustré par la courbe en pointillés. Au sens de l'invention, la fréquence propre du géophone est définie comme étant l'intersection entre la portion de pente constante non nulle et la portion de gain constant. Si l'on considère la fonction de transfert de réponse à l'accélération des vibrations du géophone, la pente a une valeur de 2. On notera que le gain normalisé de la fonction de transfert intrinsèque du géophone autour de la fréquence propre intrinsèque fo est supérieur à 1. Le géophone se trouve donc en résonance pour des fréquences proches de la fréquence propre intrinsèque fo. On notera que, pour des valeurs d'amortissement plus élevées, de l'ordre de √2/2 par exemple, le géophone n'entre plus en résonance. Le gain normalisé du géophone est alors égal à 1 pour des fréquences supérieures à la fréquence propre intrinsèque fo et le gain présente une pente constante en dessous de la fréquence propre intrinsèque fo.

Le filtre numérique selon l'invention permet d'obtenir une fonction de transfert du géophone $TF_{gf}$, comme celle représentée sur la figure 4 par la courbe en trait mixte, avec un gain sensiblement constant pour des fréquences comprises entre la fréquence propre de consigne fi et la fréquence propre intrinsèque fo.

Pour obtenir une telle fonction de transfert du géophone après filtrage $TF_{gf}$, il convient d'appliquer un filtre avec une fonction de transfert $TF_{filter}$, telle que celle représentée sur la figure 4 par la courbe en trait plein par exemple, correspondant à l'inverse de la fonction de transfert du géophone $TF_{gi}$ pour des fréquences comprises entre la fréquence propre de consigne fi et la fréquence propre intrinsèque fo.

Un tel filtre peut avoir une fonction de transfert $TF_{filter}$ de la forme :

$$\mathrm{TF}_{\mathrm{filter}}(p) = \frac{p^2 + 2m\omega_0 + {\omega_0}^2}{p^2 + 2m_1\omega_1 + {\omega_1}^2}$$

pour une fonction de transfert de réponse à la vitesse de vibration d'un géophone avec $\omega_1 = 2\pi f_1$, et $m_1$ étant l'amortissement de consigne, par exemple égal à √2/2.

La fonction de transfert $TF_{filter}$ décrite ici et représentée par la courbe en trait plein correspond à l'inverse de la fonction de transfert du géophone $TF_{gi}$ pour une fréquence supérieure à la fréquence propre de consigne fi.

Un filtre avec une telle fonction de transfert $TF_{filter}$ permet également de faire disparaître la résonance autour de la fréquence propre fo, si une telle résonance est présente, et d'obtenir ainsi un gain normalisé sensiblement égal à 1 pour des fréquences comprises entre la fréquence propre de consigne et la fréquence propre intrinsèque, mais également pour des fréquences supérieures à la fréquence propre intrinsèque fo.

On calcule ensuite l'expression et les coefficients du filtre numérique présentant la fonction de transfert $TF_{filter}$ précédemment décrite. On calcule, par exemple, l'expression et les coefficients d'un filtre récursif de type à réponse impulsionnelle infinie RII (« Infinité Response Filter » en anglais).

Pour cela, on effectue une transformée bilinéaire sur la fonction de transfert $TF_{filter}$ du filtre déterminée précédemment en remplaçant le paramètre p par $\frac{2}{T}\frac{1-z^{-1}}{1+z^{-1}}$ , T étant la période d'échantillonnage du signal dépendant du convertisseur analogique numérique utilisé.

La fonction de transfert devient alors :

$$\mathrm{TF}_{\mathrm{filter}}(z) = \frac{z^{-2}(\frac{4}{T^2}-\frac{2k_1}{T}+k)+z^{-1}(\frac{-8}{T^2}+2k_2)+(\frac{4}{T^2}+\frac{2k_1}{T}+k_2)}{z^{-2}(\frac{4}{T^2}-\frac{2K_1}{T}+K)+z^{-1}(\frac{-8}{T^2}+2K_2)+(\frac{4}{T^2}+\frac{2K}{T}+K_2)},$$

$K_1 = 2m_1\omega_1,$
avec $K_2 = {\omega_1}^2,$
$k_1 = 2m\omega_0,$
$k_2 = {\omega_0}^2,$
$m_1$ étant l'amortissement de consigne, de préférence égal à √2/2 et $\omega_1 = 2\pi f_1$, avec fi étant la fréquence de consigne.

En écrivant l'équation aux différences correspondantes, on obtient l'expression du filtre numérique à appliquer :

$$y_n = k_{\mathrm{xn}}x_n + k_{\mathrm{xn-1}}x_{n-1} + k_{\mathrm{xn-2}}x_{n-2} - k_{\mathrm{yn-1}}y_{n-1} - k_{\mathrm{yn-2}}y_{n-2}, \quad (1)$$

avec les coefficients suivants :

$$k_{\mathrm{xn}} = \frac{1}{K}\left(\frac{4}{T^2} + 2\frac{k_1}{T} + k_2\right)$$

$$k_{\mathrm{xn-1}} = \frac{1}{K}\left(2k_2 - \frac{8}{T^2}\right)$$

$$k_{\mathrm{xn-2}} = \frac{1}{K}\left(\frac{4}{T^2} - 2\frac{k_1}{T} + k_2\right),$$

$$k_{\mathrm{yn-1}} = \frac{1}{K}\left(2K_2 - \frac{8}{T^2}\right)$$

$$k_{\mathrm{yn-2}} = \frac{1}{K}\left(\frac{4}{T^2} + 2\frac{K_1}{T} + K_2\right)$$

la variable K étant définie par la formule suivante : $K = \left(\frac{4}{T^2} + \frac{2K_1}{T} + K_2\right)$,

$x_n$, $x_{n-1}$ et $x_{n-2}$ correspondant aux signaux de réponse du géophone $S_{geoph,ech}$ fournis par un convertisseur analogique numérique à l'instant t courant et aux instants t-T et t-2T respectivement, T étant la période d'échantillonnage, et $y_n$, $y_{n-1}$ et $y_{n-2}$ correspondant aux signaux de réponse du géophone $S_{capteur}$ obtenus après application du filtre numérique décrit dans l'équation (1) à l'instant t et aux instants t-T et t-2T respectivement.

Le procédé comprend également une étape S110 de détermination de l'amortissement intrinsèque m et de la fréquence propre intrinsèque fo du géophone. L'étape S110 comprend une sous-étape S111 d'alimentation de la bobine avec un courant d'excitation $I_{exc}$ pendant une durée prédéterminée Δt et une sous-étape S112 de détermination, à l'aide du signal de réponse du géophone mesuré $S_{geoph,ech}$ à la disparition du courant d'excitation $I_{exc}$, de la fréquence propre intrinsèque fo et de l'amortissement intrinsèque m du géophone.

La figure 3 représente de manière schématique le courant d'excitation $I_{exc}$ alimentant la bobine pendant une durée déterminée Δt. Il s'agit d'un créneau de courant de durée Δt. Le signal de réponse du géophone $S_{geoph}$ présente une première série d'oscillations OSC1 apparaissant après le front montant du courant d'excitation $I_{exc}$, se stabilise puis présente une deuxième série d'oscillations OSC2 apparaissant après le front descendant, soit à la disparition du courant d'excitation, puis se stabilise. Seule la deuxième série d'oscillations OSC2 est prise en compte pour la détermination de l'amortissement m et de la fréquence propre fo intrinsèque au géophone car elle correspond à une oscillation libre de la bobine. En effet, suite à l'application du courant d'excitation $I_{exc}$ dans la bobine, lors du front montant, le champ magnétique induit créé par la bobine est confronté au champ magnétique de l'aimant. La bobine se met donc à osciller par rapport à l'aimant jusqu'à atteindre une position d'équilibre, produisant ainsi la première série d'oscillations OSC1 suivie de la première stabilisation du signal de réponse du géophone $S_{geoph}$. Ce signal de réponse mesuré pendant l'intervalle de temps Δt n'est donc pas exploitable pour évaluer l'amortissement m et la fréquence propre fo intrinsèque du géophone en réponse à un signal d'excitation mécanique, puisque le signal de réponse du géophone est perturbé par la présence du courant d'excitation. En effet, dans les conditions réelles d'utilisation du géophone, la bobine n'est pas alimentée en courant mais produit un courant induit par le déplacement de la bobine de l'aimant en réponse aux vibrations de l'environnement. On se différencie ainsi de l'art antérieur en déterminant la fréquence propre et l'amortissement à la disparition du courant d'excitation.

On notera que le signal de réponse du géophone, suite à la disparition du courant d'excitation $I_{exc}$ positif, c'est-à-dire après le front descendant du créneau, présente une seconde série d'oscillations comprenant au moins un premier minimum local à l'instant t1, une première valeur nulle à l'instant t2 un premier maximum local à l'instant t3 puis se stabilise. La valeur nulle à l'instant t2 correspond à la valeur du signal de réponse du géophone mesuré auparavant en l'absence de courant d'excitation et de mouvement de la bobine. Il s'agit donc d'un signal de réponse de repos du géophone. On notera que dans le cas d'un courant d'excitation négatif, la seconde série d'oscillations présente un maximum local suivi d'un minimum local.

La présence de deux extrema locaux, autrement dit de deux oscillations, avant que le signal de réponse se stabilise à la valeur du signal de réponse de repos, est caractéristique d'un amortissement m, inférieur à 1 appelé amortissement sous critique. Par ailleurs, lorsque l'amortissement m est très inférieur à 1 (typiquement lorsqu'il est inférieur à 0,6), d'autres extrema locaux ou oscillations peuvent devenir significatifs, révélateurs d'un amortissement moindre et donc d'oscillations présentes plus longtemps.

Il a été démontré par les inventeurs, qu'en déterminant l'intervalle de temps Δt1 = t1 - t0 et l'intervalle de temps Δt2 = t2 - t0, il était possible de déterminer l'amortissement m et la fréquence propre intrinsèque du géophone à l'aide des formules suivantes :

$$m = \frac{1}{\sqrt{1+\tan(\pi\frac{\Delta t1}{\Delta t2})}},$$

$$\omega_0 = \frac{\pi}{\Delta t2\sqrt{1-m^2}},$$

$\omega_0$ étant la pulsation propre intrinsèque définie par $\omega_0 = 2\pi f_0$, fo étant la fréquence propre intrinsèque.

Une telle méthode de détermination de l'amortissement intrinsèque m et de la fréquence propre intrinsèque fo est particulièrement avantageuse en ce qu'elle ne se base pas sur la mesure de l'instant t3 qui peut être difficile à mesurer si ce maximum local est très étalé dans le temps, notamment lorsque l'amortissement est supérieur à 0,65. Il est toutefois nécessaire d'avoir au moins deux extrema locaux avant d'atteindre la valeur de repos du signal de réponse pour pouvoir déterminer Δt1 et Δt2. Dans l'application visée ici, on considère donc des géophones avec des amortissements intrinsèques inférieurs à 1, par exemple compris entre 0,2 et 0,65. A titre d'exemple, pour un amortissement intrinsèque m de l'ordre de 0,2, le signal de réponse du géophone est stabilisé après un intervalle de temps inférieur à une seconde, ce qui permet une détermination de la fréquence propre intrinsèque fo et de l'amortissement intrinsèque m assez rapide. Pour une valeur d'amortissement intrinsèque de l'ordre de 0,65, le deuxième extremum local est significatif et permet de mesurer l'instant t2 avec une bonne précision. Les intervalles de temps Δt1 et Δt2 sont déterminés à l'aide d'algorithmes de traitement du signal appropriés. La conception de tels algorithmes est à la portée de l'homme du métier.

La détermination de l'amortissement et de la fréquence propre intrinsèques du géophone à partir des intervalles de temps Δt1, Δt2 est particulièrement avantageuse par rapport à une détermination basée sur l'amplitude des extremums locaux correspondant aux instants t1 et t3.

Avantageusement, ces intervalles de temps peuvent être déterminés avec précision même si le courant d'excitation $I_{exc}$ est bruité. C'est le cas notamment lorsque le générateur de courant est placé à distance du géophone et que des distortions dûes à la propagation du courant dans un câble sur une longue distance, de l'ordre de plusieurs centaines de mètres par exemple, sont présentes.

Le procédé selon l'invention peut donc être mis en œuvre sur des géophones existants installés dans des sites peu accessibles en leur raccordant un module de filtrage et un générateur de courant à distance. Le procédé comprend ensuite une étape S120 de détermination du filtre numérique correspondant à l'actualisation des coefficients du filtre numérique définis dans l'étape d'initialisation S100 en fonction des valeurs d'amortissement m et de fréquence propre intrinsèque fo déterminées dans l'étape S110.

Enfin, le procédé comprend une étape S130 d'application du filtre numérique sur le signal de réponse du géophone $S_{geoph}$ et plus particulièrement sur le signal de réponse du géophone échantillonné $S_{geoph,ech}$.

L'application d'un filtre à réponse impulsionnelle infinie présente l'avantage de consommer moins de ressources de calcul et de mémoire qu'un filtre à réponse impulsionnelle finie. Il est donc possible d'implémenter le filtre avec des composants moins couteux, par exemple avec un microcontrôleur présentant une fréquence de 400 MHz pour le cœur et de 100 MHz pour le bus externe sur lequel le signal de réponse du géophone échantillonné $S_{geoph,ech}$ et le signal du capteur $S_{capteur}$ sont acheminés. Bien entendu, il est également possible d'utiliser un filtre numérique à réponse impulsionnelle finie ou tout autre filtre numérique, le choix du type de filtre se faisant en fonction de la puissance de calcul et de la mémoire des équipements disponibles.

Selon une option, le géophone peut être positionné in situ avant la mise en œuvre de l'étape S110 de détermination de l'amortissement intrinsèque m et de la fréquence propre intrinsèque fo. Il est ainsi possible de mesurer l'amortissement intrinsèque m et la fréquence propre intrinsèque fo dans les conditions réelles d'utilisation du géophone et donc d'obtenir un filtre adapté aux conditions réelles d'utilisation, la température et l'inclinaison du géophone ayant une influence sur les caractéristiques intrinsèques du géophone, à savoir son amortissement m et sa fréquence propre fo.

Les étapes S110 et S120 peuvent être réitérées de manière périodique ou non, afin de tenir compte de possibles changements dans l'environnement du géophone ayant une influence sur l'amortissement intrinsèque m et la fréquence propre intrinsèque fo du géophone.

## Revendications

1. Procédé de filtrage d'un signal de réponse d'un géophone, ledit géophone comportant un aimant entouré d'une bobine montée mobile par rapport à l'aimant, la bobine étant apte à se déplacer suite à des vibrations d'un environnement de ladite bobine, le géophone présentant un amortissement intrinsèque (m) et une fréquence propre intrinsèque (fo),
ledit procédé comportant:

- la détermination de l'amortissement intrinsèque (m) et de la fréquence propre intrinsèque ($f_0$) du géophone (S110), comprenant :

    o l'alimentation de la bobine avec un courant d'excitation pendant une durée prédéterminée (S111),
    o la détermination, à l'aide du signal de réponse du géophone mesuré à la disparition du courant d'excitation, ledit signal étant représentatif du courant induit dans la bobine par le déplacement de la bobine par rapport à l'aimant, de la fréquence propre intrinsèque et de l'amortissement intrinsèque du géophone (S112),

- la détermination d'un filtre numérique configuré pour modifier une fréquence propre du géophone d'une fréquence propre intrinsèque ($f_0$) à une fréquence propre de consigne ($f_1$), la fréquence propre de consigne ($f_1$) étant inférieure à la fréquence propre intrinsèque ($f_0$) et ajuster le gain du géophone de telle sorte que ledit gain soit sensiblement constant pour des fréquences comprises entre la fréquence propre de consigne ($f_1$) et la fréquence propre intrinsèque (S120),
- l'application dudit filtre sur ledit signal de réponse du géophone (S130).

2. Procédé selon la revendication précédente, **caractérisé en ce que** la fréquence propre de consigne est comprise entre 0,1 et 1 Hz.

3. Procédé selon l'une des revendications précédentes, **caractérisé en ce que** le procédé comprend le positionnement du géophone in situ avant la mise en œuvre de la détermination de l'amortissement intrinsèque et de la fréquence propre intrinsèque.

4. Procédé selon l'une des revendications précédentes, **caractérisé en ce que** le signal de réponse du géophone mesuré à la disparition du courant d'excitation comporte au moins deux extrema locaux consécutifs et une valeur prédéterminée correspondant au signal de réponse mesuré en l'absence de courant d'excitation et de vibrations, la valeur prédéterminée étant comprise entre les deux extrema locaux, et **en ce que** la fréquence propre intrinsèque et l'amortissement intrinsèque sont déterminés à partir des formules suivantes :

$$m = \frac{1}{\sqrt{1 + tan\left(\pi\frac{\Delta t1}{\Delta t2}\right)}},$$

et

$$\omega_0 = \frac{\pi}{\Delta t2\sqrt{1 - m^2}}$$

dans lesquelles :

$\Delta t1$ est un premier intervalle de temps mesuré entre la disparition du courant d'excitation et le premier extremum local,
$\Delta t2$ est un second intervalle de temps mesuré entre la disparition du courant d'excitation et la première valeur nulle prédéterminée, et
$\omega_0$ est la pulsation propre définie par $\omega_0 = 2\pi f_0$, fo étant la fréquence propre intrinsèque.

5. Procédé selon l'une des revendications précédentes, **caractérisé en ce que** l'amortissement intrinsèque est inférieur à 1, de préférence inférieur à 0,65.

6. Procédé selon l'une des revendications précédentes, **caractérisé en ce que** le gain du géophone est également ajusté de telle sorte que ledit gain soit également sensiblement constant pour des fréquences supérieures à la fréquence propre intrinsèque ($f_0$).

7. Procédé selon la revendication précédente, **caractérisé en ce que** le filtre numérique présente une fonction de transfert (TF$_{filter}$) correspondant à l'inverse de la fonction de transfert du géophone (TF$_{gi}$) pour une fréquence supérieure à la fréquence propre de consigne (f$_1$).

8. Procédé selon la revendication 7, **caractérisé en ce que** le filtre présente la fonction de transfert suivante :

$$\text{TF}_{filter}(p) = \frac{p^2 + 2m\omega_0 + \omega_0{}^2}{p^2 + 2m_1\omega_1 + \omega_1{}^2},$$

dans laquelle $\omega_0$ est la pulsation propre intrinsèque définie par $\omega_0 = 2\pi f_0$, fo étant la fréquence propre intrinsèque et $\omega_1$ est la pulsation propre de consigne définie par $\omega_1 = 2\pi f_1$, fi étant la fréquence propre de consigne et m$_1$ l'amortissement de consigne.

9. Procédé selon l'une des revendications 7 ou 8, **caractérisé en ce que** le filtre numérique est un filtre à réponse impulsionnelle infinie de la forme :

$$y_n = k_{xn}x_n + k_{xn-1}x_{n-1} + k_{xn-2}x_{n-2} - k_{yn-1}y_{n-1} - k_{yn-2}y_{n-2},$$

avec $x_n$, $x_{n-1}$ et $x_{n-2}$ correspondant au signal de réponse du géophone à l'instant t et aux instants t-T et t-2T, respectivement, et

$y_n$, $y_{n-1}$ et $y_{n-2}$ correspondant au signal de réponse du géophone modifié par le filtre numérique à l'instant t et aux instants t-T et t-2T respectivement,

T étant la période d'échantillonnage et

$k_{xn}$, $k_{xn-1}$, $k_{xn-2}$, $k_{yn-1}$, $k_{yn-2}$ étant les coefficients du filtre numérique définis par

$$k_{xn} = \frac{1}{K}\left(\frac{4}{T^2} + 2\frac{k_1}{T} + k_2\right),$$

$$k_{xn-1} = \frac{1}{K}\left(2k_2 - \frac{8}{T^2}\right),$$

$$k_{xn-2} = \frac{1}{K}\left(\frac{4}{T^2} - 2\frac{k_1}{T} + k_2\right),$$

$$k_{yn-1} = \frac{1}{K}\left(2K_2 - \frac{8}{T^2}\right),$$

$$k_{yn-2} = \frac{1}{K}\left(\frac{4}{T^2} + 2\frac{K_1}{T} + K_2\right)$$

avec

$K_1 = 2m_1\omega_1$,
$K_2 = \omega_1{}^2$
$k_1 = 2m\omega_0$,
$k_2 = \omega_0{}^2$,

et $K = \left(\frac{4}{T^2} + \frac{2K_1}{T} + K_2\right)$,

les coefficients $k_{xn}$, $k_{xn-1}$ et $k_{xn-2}$ étant en outre déterminés à l'aide des valeurs d'amortissement intrinsèque (m) et de fréquence propre intrinsèque (f$_0$) déterminées lors de la mise en œuvre de la détermination de l'amortissement intrinsèque (m) et de la fréquence propre intrinsèque (f$_0$) (S110).

10. Procédé selon la revendication 9, **caractérisé en ce que** l'amortissement de consigne m$_1$ est égal à $\sqrt{2}/2$.

**11.** Capteur vélocimétrique (1) configuré pour la mesure de vibrations comportant :

- un géophone (2) comportant un aimant entouré d'une bobine montée mobile par rapport à l'aimant, la bobine étant apte à se déplacer suite à des vibrations d'un environnement de ladite bobine,
- un module de filtrage (3) du signal de réponse $S_{geoph}$ du géophone (2) ;

- un générateur de courant (4) adapté pour recevoir un signal de commande ($S_{com}$) du module (3) et pour générer en réponse audit signal de commande ($S_{com}$) un courant d'excitation ($I_{exc}$) de durée déterminée ($\Delta t$) dans la bobine du géophone (2); ledit module (3) comprenant :
- un calculateur (32) configuré pour :

  o déterminer l'amortissement intrinsèque (m) et la fréquence propre intrinsèque ($f_0$) du géophone en alimentant la bobine avec le courant d'excitation pendant la durée prédéterminée ($\Delta t$) et en déterminant, à l'aide du signal de réponse du géophone ($S_{geoph}$) mesuré à la disparition du courant d'excitation (OSC2), ledit signal étant représentatif du courant induit dans la bobine par le déplacement de la bobine par rapport à l'aimant, la fréquence propre intrinsèque ($f_0$) et l'amortissement intrinsèque (m) du géophone (2),
  o déterminer un filtre numérique configuré pour modifier une fréquence propre du géophone d'une fréquence propre intrinsèque ($f_0$) à une fréquence propre de consigne ($f_1$), la fréquence propre de consigne ($f_1$) étant inférieure à la fréquence propre intrinsèque ($f_0$) et ajuster le gain du géophone de telle sorte que ledit gain soit sensiblement constant pour des fréquences comprises entre la fréquence propre de consigne ($f_1$) et la fréquence propre intrinsèque (fo),
  o appliquer ledit filtre sur le signal de réponse $S_{geoph}$ fourni par le géophone (2).

**12.** Produit programme d'ordinateur comprenant des instructions permettant la mise en œuvre du procédé selon l'une quelconque des revendications 1 à 10 lorsque ledit programme est exécuté sur un ordinateur.


**Patentansprüche**

**1.** Verfahren zum Filtern eines Antwortsignals eines Geophons, wobei das Geophon einen von einer Spule umgebenen Magneten aufweist, die bezüglich des Magneten beweglich montiert ist, wobei die Spule fähig ist, sich nach Schwingungen einer Umgebung der Spule zu verschieben, wobei das Geophon eine intrinsische Dämpfung (m) und eine intrinsische Eigenfrequenz ($f_0$) aufweist,
wobei das Verfahren aufweist:

- die Bestimmung der intrinsischen Dämpfung (m) und der intrinsischen Eigenfrequenz ($f_0$) des Geophons (S110), die enthält:

  ∘ die Versorgung der Spule mit einem Erregerstrom während einer vorbestimmten Dauer (S111),
  ∘ die Bestimmung, mit Hilfe des beim Verschwinden des Erregerstroms gemessenen Antwortsignals des Geophons, wobei das Signal für den durch die Verschiebung der Spule bezüglich des Magneten in die Spule induzierten Strom repräsentativ ist, der intrinsischen Eigenfrequenz und der intrinsischen Dämpfung des Geophons (S112),

- die Bestimmung eines digitalen Filters, das konfiguriert ist, eine Eigenfrequenz des Geophons von einer intrinsischen Eigenfrequenz ($f_0$) zu einer Solleigenfrequenz ($f_1$) zu verändern, wobei die Solleigenfrequenz ($f_1$) niedriger ist als die intrinsische Eigenfrequenz (fo), und die Verstärkung des Geophons so anzupassen, dass die Verstärkung für Frequenzen, die zwischen der Solleigenfrequenz ($f_1$) und der intrinsischen Eigenfrequenz liegen (S120), im Wesentlichen konstant ist,
- die Anwendung des Filters an das Antwortsignal des Geophons (S130).

**2.** Verfahren nach dem vorhergehenden Anspruch, **dadurch gekennzeichnet, dass** die Solleigenfrequenz zwischen 0,1 und 1 Hz liegt.

**3.** Verfahren nach einem der vorhergehenden Ansprüche, **dadurch gekennzeichnet, dass** das Verfahren die Positionierung des Geophons vor Ort vor der Durchführung der Bestimmung der intrinsischen Dämpfung und der intrinsischen Eigenfrequenz enthält.

**4.** Verfahren nach einem der vorhergehenden Ansprüche, **dadurch gekennzeichnet, dass** das beim Verschwinden des Erregerstroms gemessene Antwortsignal des Geophons mindestens zwei aufeinanderfolgende lokale Extrema und einen vorbestimmten Wert entsprechend dem in Abwesenheit von Erregerstrom und von Schwingungen gemessenen Antwortsignal aufweist, wobei der vorbestimmte Wert zwischen den zwei lokalen Extrema liegt, und dass die intrinsische Eigenfrequenz und die intrinsische Dämpfung ausgehend von den folgenden Formeln bestimmt werden:

$$m = \frac{1}{\sqrt{1+tan\left(\pi\frac{\Delta t1}{\Delta t2}\right)}},$$

und

$$\omega_0 = \frac{\pi}{\Delta t2\sqrt{1-m^2}}$$

in denen:

Δt1 ein erstes Zeitintervall gemessen zwischen dem Verschwinden des Erregerstroms und dem ersten lokalen Extremum ist,
Δt2 ein zweites Zeitintervall gemessen zwischen dem Verschwinden des Erregerstroms und dem vorbestimmten ersten Wert Null ist, und
$\omega_0$ die Eigenkreisfrequenz definiert durch $\omega_0 = 2\pi f_0$ ist, wobei $f_0$ die intrinsische Eigenfrequenz ist.

**5.** Verfahren nach einem der vorhergehenden Ansprüche, **dadurch gekennzeichnet, dass** die intrinsische Dämpfung geringer als 1, vorzugsweise geringer als 0,65 ist.

**6.** Verfahren nach einem der vorhergehenden Ansprüche, **dadurch gekennzeichnet, dass** die Verstärkung des Geophons ebenfalls so angepasst wird, dass die Verstärkung ebenfalls für Frequenzen höher als die intrinsische Eigenfrequenz ($f_0$) im Wesentlichen konstant ist.

**7.** Verfahren nach dem vorhergehenden Anspruch, **dadurch gekennzeichnet, dass** das digitale Filter eine Übertragungsfunktion ($TF_{filter}$) aufweist, die dem Kehrwert der Übertragungsfunktion des Geophons ($TF_{gi}$) für eine Frequenz höher als die Solleigenfrequenz ($f_1$) entspricht.

**8.** Verfahren nach Anspruch 7, **dadurch gekennzeichnet, dass** das Filter die folgende Übertragungsfunktion aufweist:

$$TF_{filter}(p) = \frac{p^2+2m\omega_0+\omega_0{}^2}{p^2+2m_1\omega_1+\omega_1{}^2},$$

in der $\omega_0$ die intrinsische Eigenkreisfrequenz definiert durch $\omega_0 = 2\pi f_0$ ist, wobei $f_0$ die intrinsische Eigenfrequenz und $\omega_1$ die Solleigenkreisfrequenz definiert durch $\omega_1 = 2\pi f_1$ ist, wobei $f_1$ die Solleigenfrequenz und $m_1$ die Solldämpfung ist.

**9.** Verfahren nach einem der Ansprüche 7 oder 8, **dadurch gekennzeichnet, dass** das digitale Filter ein Filter mit unendlicher Impulsantwort der folgenden Form ist:

$$y_n = k_{xn}x_n + k_{xn-1}x_{n-1} + k_{xn-2}x_{n-2} - k_{yn-1}y_{n-1} - k_{yn-2}y_{n-2},$$

wobei $x_n$, $x_{n-1}$ und $x_{n-2}$ dem Antwortsignal des Geophons zum Zeitpunkt t bzw. zu den Zeitpunkten t-T und t-2T entsprechen, und
$y_n$, $y_{n-1}$ und $y_{n-2}$ dem durch das digitale Filter veränderten Antwortsignal des Geophons zum Zeitpunkt t bzw. zu den Zeitpunkten t-T und t-2T entsprechen,
wobei T die Tastperiode ist, und
$k_{xn}$, $k_{xn-1}$, $k_{xn-2}$, $k_{yn-1}$, $k_{yn-2}$ die Koeffizienten des digitalen Filters sind, definiert durch

$$k_{xn} = \frac{1}{K}\left(\frac{4}{T^2} + 2\frac{k_1}{T} + k_2\right),$$

$$k_{xn-1} = \frac{1}{K}\left(2k_2 - \frac{8}{T^2}\right),$$

$$k_{xn-2} = \frac{1}{K}\left(\frac{4}{T^2} - 2\frac{k_1}{T} + k_2\right),$$

$$k_{yn-1} = \frac{1}{K}\left(2K_2 - \frac{8}{T^2}\right),$$

$$k_{yn-2} = \frac{1}{K}\left(\frac{4}{T^2} + 2\frac{K_1}{T} + K_2\right),$$

mit

$K_1 = 2m_1\omega_1,$
$K_2 = \omega_1^2,$
$k_1 = 2m\omega_0,$
$k_2 = \omega_0^2,$
und $K = \left(\frac{4}{T^2} + \frac{2K_1}{T} + K_2\right)$ ,

wobei die Koeffizienten $k_{xn}$, $k_{xn-1}$ und $k_{xn-2}$ außerdem mit Hilfe der Werte der intrinsischen Dämpfung (m) und der intrinsischen Eigenfrequenz ($f_0$) bestimmt werden, die bei der Durchführung der Bestimmung der intrinsischen Dämpfung (m) und der intrinsischen Eigenfrequenz ($f_0$) bestimmt werden (S110).

**10.** Verfahren nach Anspruch 9, **dadurch gekennzeichnet, dass** die Solldämpfung $m_1$ gleich $\sqrt{2}/2$ ist.

**11.** Geschwindigkeitsmesssensor (1), der für die Messung von Schwingungen konfiguriert ist, der aufweist:

- ein Geophon (2), das einen von einer Spule umgebenen Magneten aufweist, die bezüglich des Magneten beweglich montiert ist, wobei die Spule fähig ist, sich nach Schwingungen einer Umgebung der Spule zu verschieben,
- ein Filtermodul (3) des Antwortsignals $S_{geoph}$ des Geophons (2);
- einen Stromgenerator (4), der geeignet ist, ein Steuersignal ($S_{com}$) vom Modul (3) zu empfangen und als Antwort auf das Steuersignal ($S_{com}$) einen Erregerstrom ($I_{exc}$) bestimmter Dauer ($\Delta t$) in der Spule des Geophons (2) zu erzeugen; wobei das Modul (3) enthält:

- einen Rechner (32), der konfiguriert ist, um:

◦ die intrinsische Dämpfung (m) und die intrinsische Eigenfrequenz ($f_0$) des Geophons zu bestimmen, indem die Spule während der vorbestimmten Dauer ($\Delta t$) mit dem Erregerstrom versorgt wird, und indem mit Hilfe des beim Verschwinden des Erregerstroms (OSC2) gemessenen Antwortsignals des Geophons ($S_{geoph}$), wobei das Signal für den durch die Verschiebung der Spule bezüglich des Magneten in die Spule induzierten Strom repräsentativ ist, die intrinsische Eigenfrequenz ($f_0$) und die intrinsische Dämpfung (m) des Geophons (2) bestimmt werden,
◦ ein digitales Filter zu bestimmen, das konfiguriert ist, eine Eigenfrequenz des Geophons von einer intrinsischen Eigenfrequenz ($f_0$) in eine Solleigenfrequenz ($f_1$) zu ändern, wobei die Solleigenfrequenz ($f_1$) niedriger ist als die intrinsische Eigenfrequenz ($f_0$), und die Verstärkung des Geophons so anzupassen, dass die Verstärkung für Frequenzen, die zwischen der Solleigenfrequenz ($f_1$) und der intrinsischen Eigenfrequenz ($f_0$) liegen, im Wesentlichen konstant ist,
◦ das Filter an das vom Geophon (2) gelieferte Antwortsignal $S_{geoph}$ anzuwenden.

**12.** Computerprogrammprodukt, das Anweisungen enthält, die die Durchführung des Verfahrens nach einem der Ansprüche 1 bis 10 erlauben, wenn das Programm auf einem Computer ausgeführt wird.

**Claims**

**1.** Method for filtering a response signal of a geophone, said geophone including a magnet surrounded by a coil mounted so as to be able to move with respect to the magnet, the coil being able to move following vibrations of an environment of said coil, the geophone having an intrinsic damping (m) and an intrinsic natural frequency ($f_0$), said method including:

- determining the intrinsic damping (m) and the intrinsic natural frequency ($f_0$) of the geophone (S110), comprising:

  ◦ supplying the coil with an excitation current for a predetermined period (S111),
  ◦ determining, by means of the response signal of the geophone measured when the excitation current disappears, said signal representing the current induced in the coil by the movement of the coil with respect to the magnet, the intrinsic natural frequency and the intrinsic damping of the geophone (S112),

- determining a digital filter configured for modifying a natural frequency of the geophone from an intrinsic natural frequency ($f_0$) to a set natural frequency ($f_1$), the set natural frequency ($f_1$) being lower than the intrinsic natural frequency (fo), and adjusting the gain of the geophone so that said gain is substantially constant for frequencies lying between the set natural frequency ($f_1$) and the intrinsic natural frequency (S120),
- applying said filter to said response signal of the geophone (S130).

**2.** Method according to the preceding claim, **characterised in that** the set natural frequency is between 0.1 and 1 Hz.

**3.** Method according to one of the preceding claims, **characterised in that** the method comprises the positioning of the geophone in situ before implementation of the determination of the intrinsic damping and of the intrinsic natural frequency.

**4.** Method according to one of the preceding claims, **characterised in that** the response signal of the geophone measured when the excitation current disappears includes at least two consecutive local extrema and a predetermined value corresponding to the response signal measured in the absence of excitation current and vibrations, the predetermined value lying between the two local extrema, and **in that** the intrinsic natural frequency and the intrinsic damping are determined from the following formulae:

$$m = \frac{1}{\sqrt{1 + tan\left(\pi \frac{\Delta t1}{\Delta t2}\right)}},$$

and

$$\omega_0 = \frac{\pi}{\Delta t2 \sqrt{1 - m^2}}$$

wherein:

$\Delta t1$ is a first time interval measured between the disappearance of the excitation current and the first local extremum,
$\Delta t2$ is a second time interval measured between the disappearance of the excitation and the first predetermined nil value, and
$\omega_0$ is the natural angular frequency defined by $\omega_0 = 2\pi f_0$, fo being the intrinsic natural frequency.

**5.** Method according to one of the preceding claims, **characterised in that** the intrinsic damping is less than 1, preferably less than 0.65.

6. Method according to one of the preceding claims, **characterised in that** the gain of the geophone is also adjusted so that said gain is also substantially constant for frequencies higher than the intrinsic natural frequency ($f_0$).

7. Method according to the preceding claim, **characterised in that** the digital filter has a transfer function ($TF_{filter}$) corresponding to the inverse of the transfer function of the geophone ($TF_{gi}$) for a frequency higher than the set natural frequency ($f_1$).

8. Method according to claim 7, **characterised in that** the filter has the following transfer function:

$$TF_{filter}(p) = \frac{p^2 + 2m\omega_0 + \omega_0{}^2}{p^2 + 2m_1\omega_1 + \omega_1{}^2},$$

wherein $\omega_0$ is the intrinsic natural angular frequency defined by $\omega_0 = 2\pi f_0$, $f_0$ being the intrinsic natural frequency and $\omega_1$ is the set natural angular frequency defined by $\omega_1 = 2\pi f_1$, $f_1$ being the set natural frequency and $m_1$ the set damping.

9. Method according to one of claims 7 or 8, **characterised in that** the digital filter is an infinite pulse response filter of the form:

$$y_n = k_{xn}x_n + k_{xn-1}x_{n-1} + k_{xn-2}x_{n-2} - k_{yn-1}y_{n-1} - k_{yn-2}y_{n-2},$$

with $x_n$, $x_{n-1}$ and $x_{n-2}$ corresponding to the response signal of the geophone at the instant t and at the instants t-T and t-2T, respectively, and
$y_n$, $y_{n-1}$ and $y_{n-2}$ corresponding to the response signal of the geophone modified by the digital filter at the instant t and at the instants t-T and t-2T, respectively,
T being the sampling period, and
$k_{xn}$, $k_{xn-1}$, $k_{xn-2}$, $k_{yn-1}$, $k_{yn-2}$ being the coefficients of the digital filter defined by

$$k_{xn} = \frac{1}{K}\left(\frac{4}{T^2} + 2\frac{k_1}{T} + k_2\right),$$

$$k_{xn-1} = \frac{1}{K}\left(2k_2 - \frac{8}{T^2}\right),$$

$$k_{xn-2} = \frac{1}{K}\left(\frac{4}{T^2} - 2\frac{k_1}{T} + k_2\right),$$

$$k_{yn-1} = \frac{1}{K}\left(2K_2 - \frac{8}{T^2}\right),$$

$$k_{yn-2} = \frac{1}{K}\left(\frac{4}{T^2} + 2\frac{K_1}{T} + K_2\right)$$

with

$K_1 = 2m_1\omega_1$,
$K_2 = \omega_1{}^2$,
$k_1 = 2m\omega_0$,
$k_2 = \omega_0{}^2$,

$$K = \left(\frac{4}{T^2} + \frac{2K_1}{T} + K_2\right),$$

and

the coefficients $k_{xn}$, $k_{xn-1}$ and $k_{xn-2}$ furthermore being determined by means of the intrinsic damping value (m) and intrinsic natural frequency value ($f_0$) determined during implementation of the determination of the intrinsic damping (m) and of the intrinsic natural frequency ($f_0$) (S110).

**10.** Method according to claim 9, **characterised in that** the set damping $m_1$ is equal to $\sqrt{2}/2$.

**11.** Velocimeter sensor (1) configured for measuring vibrations, including:

- a geophone (2) including a magnet surrounded by a coil mounted so as to be able to move with respect to the magnet, the coil being able to move following vibrations of an environment of said coil,
- a module (3) for filtering the response signal $S_{geoph}$ of the geophone (2);
- a current generator (4) adapted for receiving a control signal ($S_{com}$) from the module (3) and for generating, in response to said control signal ($S_{com}$), an excitation current ($I_{exc}$) of given duration ($\Delta t$) in the coil of the geophone (2); said module (3) comprising:

  - a computer (32) configured for:

    ∘ determining the intrinsic damping (m) and the intrinsic natural frequency ($f_0$) of the geophone by supplying the coil with the excitation current during the predetermined period ($\Delta t$) and by determining, by means of the response signal of the geophone ($S_{geoph}$) measured when the excitation current (OSC2) disappears, said signal representing the current induced in the coil by the movement of the coil with respect to the magnet, the intrinsic natural frequency ($f_0$) and the intrinsic damping (m) of the geophone (2),
    ∘ determining a digital filter configured for modifying a natural frequency of the geophone from an intrinsic natural frequency ($f_0$) to a set natural frequency ($f_1$), the set natural frequency ($f_1$) being lower than the intrinsic natural frequency (fo), and adjusting the gain of the geophone so that said gain is substantially constant for frequencies lying between the set natural frequency ($f_1$) and the intrinsic natural frequency (fo),
    ∘ applying said filter to the response signal $S_{geoph}$ supplied by the geophone (2).

**12.** Computer program product comprising instructions for implementing the method according to any one of claims 1 to 10 when said program is executed on a computer.

**FIG. 1**

**FIG. 2**

FIG. 3

FIG. 4

**EP 3 470 884 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3307575 A1
- US 4296483 B2